# EUROPEAN PATENT SPECIFICATION

(11) **EP 2 174 810 B1**
(45) Date of publication and mention of the grant of the patent: **28.11.2012**
(21) Application number: 09446505.1
(22) Date of filing: 30.09.2009
(51) Int. Cl.: B60H 1/32, B60H 1/00

(54) **System and device comprising a combined condenser and evaporator**
System und Vorrichtung mit einem kombinerten Kondensator und Verdampfer
Système et dispositif comprenant un condenseur-évaporateur

(30) Priority: 07.10.2008 SE 0850030
(43) Date of publication of application: 14.04.2010
(73) Proprietor: Scania CV AB (publ), 151 87 Södertälje (SE)
(72) Inventor: Hall, Ola, 117 67 Stockholm (SE)

(56) References cited:
- WO-A1-2005/071328
- JP-A- 10 300 271
- US-A1- 2004 089 014
- US-B1- 6 185 957

## Description

### Technical field

The present invention relates generally to a compressor system with closed refrigerant circuits for cooling and/or warming purposes which comprise at least a condenser and an evaporator. The invention relates in particular to a system and a device for cooling and/or warming the interior of a vehicle and in particular the driver's space/cab of a commercial/heavy vehicle with a tiltable cab. The invention relates more specifically to compressor systems which comprise at least a further secondary low-pressure circuit which transfers cold/heat by means of water and/or glycol or some other suitable heat or cold transfer medium.

### State of the art

Air conditioning systems in vehicles usually comprise in a known manner an air-cooled condenser situated at or near the front of the vehicle, an evaporator situated somewhere in the vehicle's cab, e.g. in or under the instrument panel, and pipelines or hoses which connect these components to a hermetically sealed and pressurised system which usually also comprises an expansion means, a drying filter or an accumulator, and a compressor. A number of different gases may be used as refrigerant. In vehicle applications, R134a is often used as refrigerant.

Carbon dioxide (CO₂, called R744) has recently begun to be increasingly used as refrigerant. It is a readily available, non-hazardous, non-flammable and non-explosive gas which causes very limited or no harm if it leaks out into the atmosphere. A disadvantage of CO₂ as refrigerant is that the compressor system has to operate at higher pressures than normal to achieve sufficient efficiency in the cooling system. The higher pressure increases the risk of leakage from hoses, lines and connections. Hoses are never completely tight, as a certain amount of leakage always occurs through the rubber material.

The leakage problem is particularly obvious in vehicles with tiltable cabs. Such vehicles require longer hoses/lines and/or more connections to make it possible to connect a cooling element in the cab to other parts of the cooling system which are usually situated in the vehicle's engine space, and yet to allow the cab to be tilted. If long hoses and lines and a plurality of connections are used on the refrigerant side, which is under great pressure, there is persistent risk of leakage. In such applications it is advantageous, and not unusual, for a further cooling loop, a so-called secondary loop, to be used, i.e. for a further low-pressure cooling circuit with water and/or glycol as cold transfer medium to be connected to the evaporator of the compressor system via a liquid-based heat exchanger. The fact that this circuit uses a significantly lower pressure reduces the leakage risk.

The liquid, usually water, is therefore cooled in the evaporator of the refrigerant circuit and is pumped to the cab and to the cooling element situated therein which itself cools the air in the cab by means of a fan. The liquid needs to maintain a temperature just above zero degrees. If it is colder than zero degrees, the condensate which forms in the cab's cooling element will freeze and thereby impair the functioning of the cooling system. Cold is thus switched from the primary refrigerant circuit containing CO₂ or some other suitable refrigerant to a circuit containing a different fluid at a lower pressure with consequently less leakage risk.

A secondary loop may also be used with advantage if flammable refrigerants are used, since it will be undesirable to risk such substances leaking out inside the driving cab. Examples of such flammable refrigerants are propane and R152a, which are used despite their flammability because they are regarded as resulting in better efficiency than, for example, the more commonly used R134a.

In industry, ships and other contexts where there is usually unlimited availability of cooling water, it is usual for the condenser of the refrigerant circuit also to be cooled by water. In vehicles this is not so easy to accomplish, since the water available is the engine's cooling water, which is usually regarded as maintaining too high a temperature for achieving optimum efficiency. Achieving sufficient efficiency with CO₂ as refrigerant in a vehicle's compressor system entails using internal heat exchange between cold and warm sides of the refrigerant circuit.

Novel refrigerants therefore sometimes involve higher working pressures and, as previously mentioned, some refrigerants are flammable but may result in better performance and efficiency of the cooling system and also improved environmental performance. Refrigerants which entail high pressure or are flammable are extremely difficult in the case of vehicles with tiltable cabs. The risk of leakage increases and it is desirable to reduce the risk of leakage from hoses and connections for both safety, quality and environmental reasons. There is therefore an endeavour to minimise the length of the hoses and the number of connections, including in the primary refrigerant circuit.

Various systems and solutions for cooling a tiltable driving cab are prior art.

Patent specification W02005/120868 (Scania) describes a conventional air conditioning system suited to vehicles with tiltable cabs. The object is to solve the problem by carbon dioxide at high pressure and the use of rubber lines. The system is situated on the vehicle's chassis and cold or warm air is supplied to the cab. No liquids or cooling media are distributed to the cab and the length of the line system of the refrigerant circuit is not shorter.

Patent specification US6185957 (Modine Manufacturing Company) refers to a cooling installation for carbon dioxide with the evaporator combined with a form of internal heat exchanger. Both the evaporator and the condenser are air-cooled and constitute mutually separate units. The line system is not minimised.

Patent specification WO 2005/071328 discloses a system upon which the preamble of appending claim 1 is based.

Prior art does not indicate how the risk of leakage in the refrigerant circuit of the compressor system can effectively be reduced. There is no indication of how to achieve with sufficient efficiency a compressor system suited to refrigerants which involve high working pressures. Nor is there any prior indication of how the compressor system and its constituent parts may become less bulky, less expensive to manufacture and easier to fit.

### Objects and most important characteristics of the invention

The object of the invention is to solve said problems and propose a system and a device for effective cooling and/or warming which entail a reduced risk of leakage of the refrigerant.

A further object of the invention is to propose a device which is suited to using refrigerants which involve high working pressures and yet result in good efficiency.

A further object of the invention is to propose a system and a device which are compact and minimise the length of pipelines and hoses and minimise the number of connections.

A further object of the invention is to minimise the number of separate parts in the compressor system and propose a simple compact unit which is easy to fit into the vehicle and makes it possible to shorten assembly time during production.

A further object of the invention is to make it easier to obtain both cooled water and warmed water from a single compact unit.

The aforesaid and further objects are achieved according to the invention by a system and a device according to the features indicated in claim 1.

In brief, the invention entails at least the condenser and the evaporator of the refrigerant circuit being combined to form, and being manufactured as, a mutually integrated unit in the form of a plate heat exchanger in which alternate plates generally channel the cooling water and the other plates channel the refrigerant. At least one internal heat exchanger, i.e. a heat exchanger which exchanges heat between the high and low pressure sides of the refrigerant circuit, is integrated in the combined unit. This means fewer connections, eliminates some of the hoses and results in shorter line runs. A compact refrigerant circuit also affords advantages such as smaller pressure drop and better efficiency. The expansion means, in the form of a fixed constriction, may be provided, e.g. by embossing, in one or more of the unit's plates in order to reduce the number of potentially leaky connections and lines/hoses. The combined unit may also be provided with pipe connections so that an adjustable expansion valve can be screwed firmly on the outside of the unit. The fact that the flow between the plates in the heat exchanger can be configured as desired makes it possible to achieve internal heat exchange between the cold and warm sides of the refrigerant circuit, with partly vaporised, totally vaporised or superheated gas on the low pressure side. A drying filter may also be fitted in or after the condenser in a manner similar to that which is usual in today's divided systems, and if an accumulator is used instead it may be situated in or after the evaporator.

The evaporator is heated by water and/or glycol which, having thus cooled down, is thereafter pumped to the cab and the cooling element situated therein, and the air in the cab is thereby cooled. The condenser is cooled either by a relatively cold water/glycol mixture from the engine or by the liquid which has been used for cooling the cab's cooling element. A water cooler situated at the front of the vehicle may be necessary to lower the temperature of the glycol mixture when it has been warmed by the condenser.

Further features and advantages of the invention are indicated by the more detailed description of the invention set out below, the attached drawings and the other claims.

### Brief list of the drawings

The invention is described below in more detail in the form of a number of preferred embodiment examples with reference to the attached drawings.
**Figure 1** depicts schematically a compressor system according to the invention with the evaporator and the condenser combined in a mutually integrated common unit.
**Figure 2** depicts in perspective the integrated unit according to Figure 1 in the form of a plate heat exchanger.
**Figure 3** depicts schematically a first embodiment of a combined unit according to the invention with an internal heat exchanger.
**Figure 4** depicts schematically a second embodiment of a combined unit according to the invention with a further form of internal heat exchanger.
**Figure 5** depicts schematically a third embodiment of a combined internal heat exchanger.
**Figure 6** depicts a notional schematic section through the combined unit according to the invention, in which the internal heat exchangers according to Figure 5 are illustrated.
**Figure 7** depicts a notional schematic section through a combined unit according to the invention with an integrated constriction, here embossed in one or more of the unit's plates.
**Figure 8** depicts in perspective the combined unit with integrated constriction, i.e. the unit has no external pipe connections for an expansion means.
**Figure 9** depicts in perspective the combined unit with both an integrated accumulator and an integrated constriction.
Figure **10** depicts in perspective the combined unit for external expansion valve and an integrated drying filter.

### Description of preferred embodiments

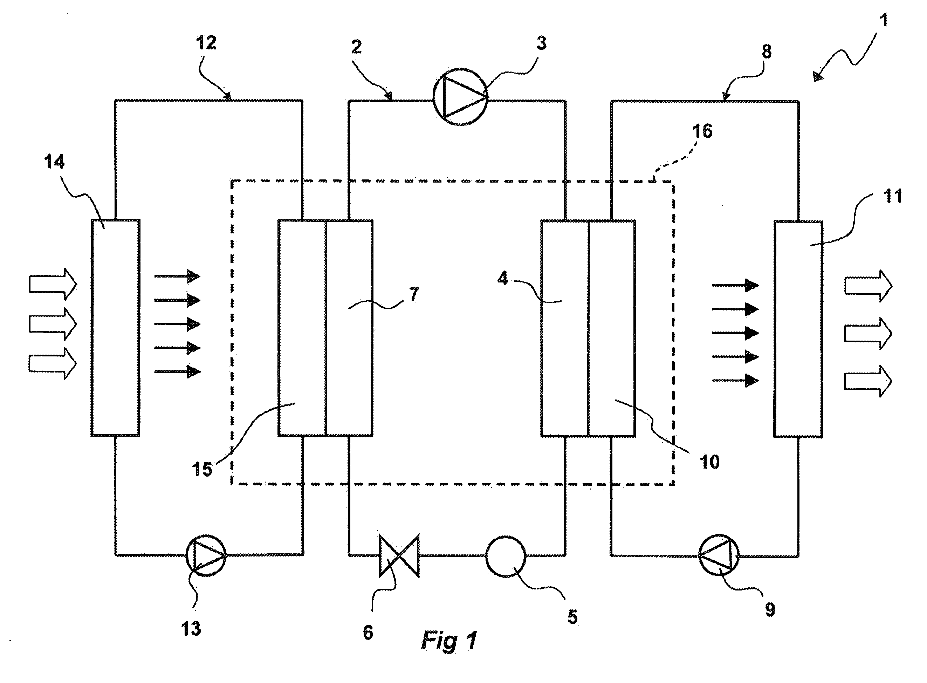

**Figure 1** thus depicts a compressor system **1** according to the invention. It comprises in this particular case three different circuits. The first circuit, the primary refrigerant circuit **2,** comprises a compressor **3,** a condenser **4**, a drying filter **5,** an expansion means **6** and an evaporator **7**. These components are connected to one another by a line system and the whole circuit **2** is hermetically sealed and contains, and operates under pressure by means of, a refrigerant, e.g. CO₂.

The expansion means **6** may take the form of an adjustable expansion valve or a fixed constriction. In compressor systems where an expansion valve is used, it is important that the expansion valve be constantly supplied with fluid. A drying filter **5** is therefore situated upstream of the expansion valve **6** and has its outlet in the bottom of its container (not depicted). It is thus ensured that the expansion valve **6** is always supplied with fluid and therefore operates correctly.

A second circuit **8,** a cooling circuit, comprises a first low-pressure pump **9,** a first heat exchanger **10** and a low-pressure, e.g. air-cooled, radiator **11**. The heat exchanger **10** cooperates with the condenser **4** of the primary refrigerant circuit. This second circuit **8** contains water or a mixture of water and glycol. The pump **9** provides a flow in the circuit **8** so that the water is warmed by the condenser **4** in the heat exchanger **10** and is supplied to the radiator **11** in which heat is given off to the surroundings via an air flow, possibly with the assistance of a fan. The radiator **11** may be situated at a forward portion of the vehicle where air still passes when the vehicle is in motion.

The third circuit **12,** a cooling circuit, comprises a second low-pressure pump **13,** a cooling element **14** and a second heat exchanger **15.** The heat exchanger **15** cooperates with the evaporator **7** of the primary refrigerant circuit. The circuit **12** contains water or a mixture of water and glycol. The pump **13** provides a flow in the circuit **12** so that the water is cooled in the heat exchanger **15** by the evaporator **7** of the refrigerant circuit and is thereafter led to the cooling element **14 i**n which passing air is cooled, e.g. with the assistance of an undepicted fan. The cooling element **14** may be situated at a suitable location in the driver's space/cab of a commercial vehicle with a view to keeping the air inside the cab cool irrespective of the temperature of the vehicle's external surroundings.

According to the invention, the water-cooled condenser **4** and the water-cooled evaporator **7** are combined in a single unit, i.e. the condenser **4** and the evaporator **7** are integrated in a single unit **16** together with the respective heat exchangers **10,15.** The integrated unit **16** is represented by the broken line.

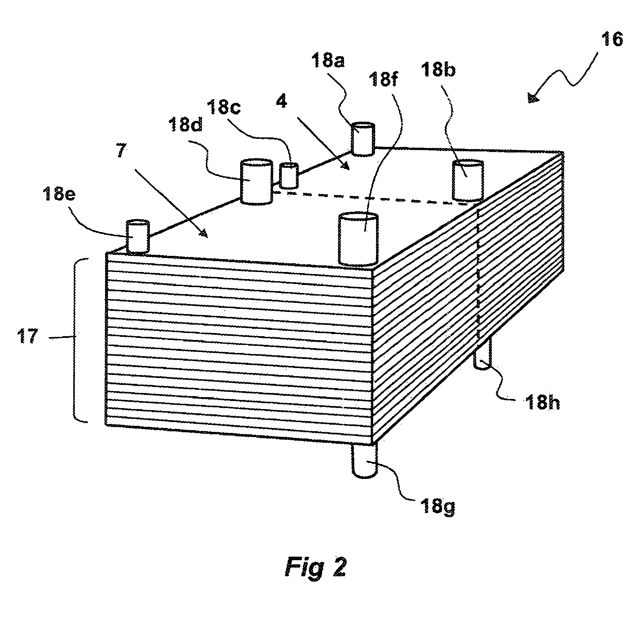

**Figure 2** depicts a view of a unit **16** according to the invention with combined/integrated evaporator **7** and condenser **4**. The unit **16** takes the form here of a substantially rectangular plate heat exchanger provided with a number of plates **17** which form a number of mutually delineated ducts. The unit **16** has pipe connections **18a-h** for connecting the external components and circuits which form part of the system illustrated in Figure 1. Refrigerants and coolants thus flow into and out of the unit **16** via these pipe connections **18a-h,** some of which, **18g,h**, are arranged for external fitting of the drying filter **5** and/or the expansion valve **6.** The unit **16** may in reality comprise many more plates **17** than here depicted and may be so constructed that the refrigerant can pass to and fro adjacent to the respective coolant a number of times before it is led out from the unit **16,** with a view to achieving as high efficiency of the system **1** as possible.

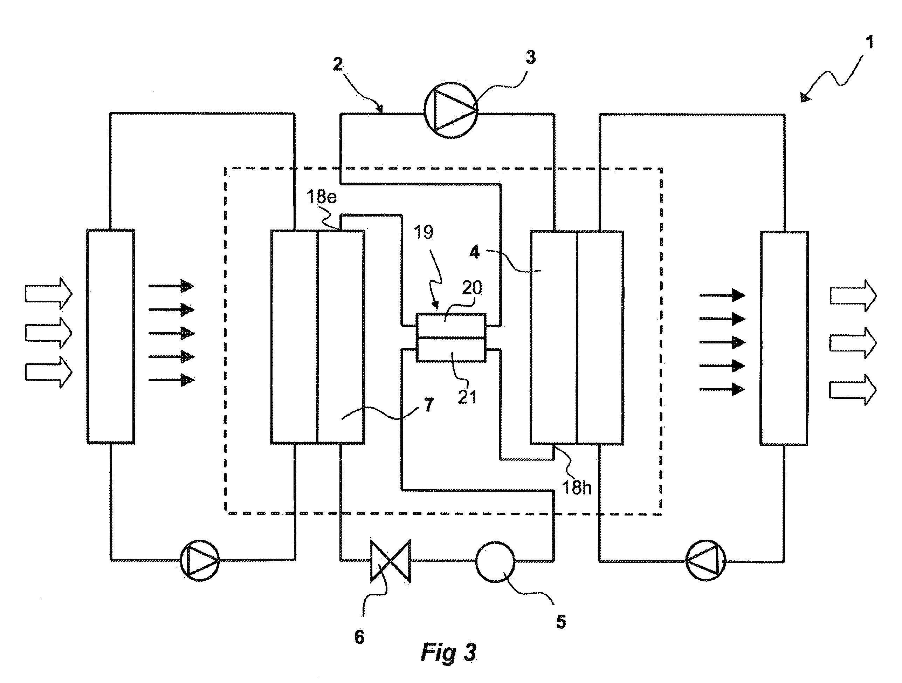

**Figure 3** depicts the invention's system **1** according to Figure **1** but here with an internal heat exchanger **19** adapted to increasing the efficiency of the system **1** and making it possible and easier for carbon dioxide, for example, to be used as refrigerant. In principle, the internal heat exchanger **19** is adapted to exchanging heat between the cold and warm sides of the refrigerant circuit **2**. A cold part-circuit **2**0 of the internal heat exchanger **19** is therefore connected between the outlet **18e** of the evaporator **7** and the inlet of the compressor system **3**, the compressor system's suction side, and the warm other part-circuit **21** of the internal heat exchanger **19** is connected between the outlet **18h** of the condenser **4** and the inlet of the drying filter **5.** The result is heat exchange between the refrigerants which come out from the condenser **4** and from the evaporator **7** respectively, i.e. the residual heat in the refrigerant from the condenser **4** warms the refrigerant from the evaporator **7,** or in other words, the refrigerant which is led to the compressor **3** becomes warmer and the refrigerant which is led to the drying filter **5** becomes colder.

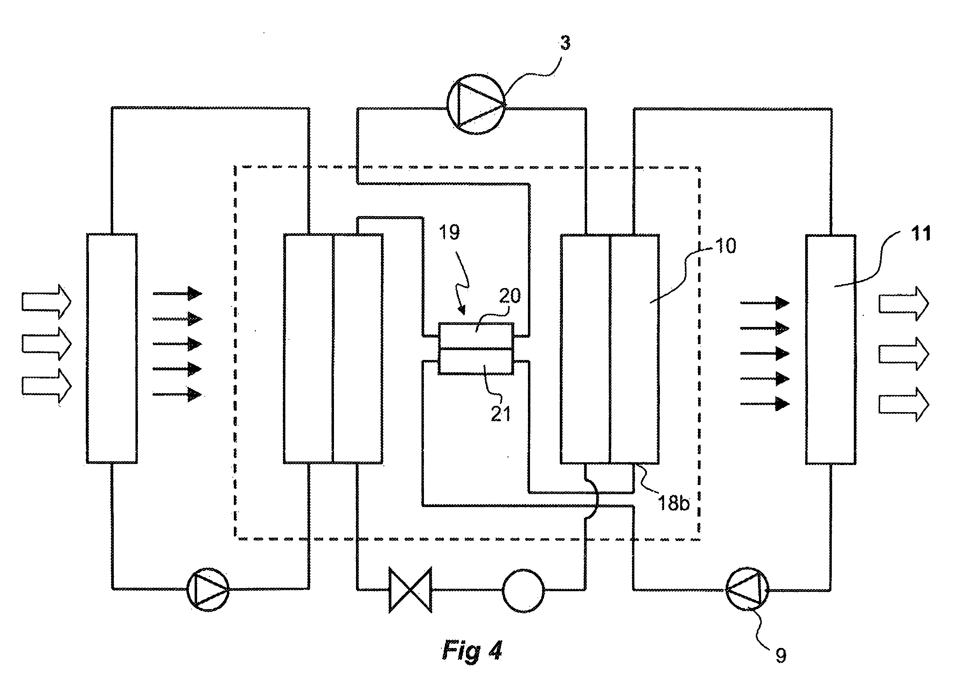

**Figure 4** depicts an alternative embodiment of an internal heat exchanger **19**. Here the cold part-circuit **20** of the internal heat exchanger is connected in the same way as in Figure 3 but its warm part-circuit **21** is instead connected between the outlet of the first pump 9 and the inlet **18b** of the first heat exchanger **10.** The coolant from the low-pressure radiator **11** is thus further cooled before it enters the first heat exchanger **10,** which itself cools the condenser **4**. The refrigerant which is led to the compressor **3** is similarly warmed. Better efficiency is achieved.

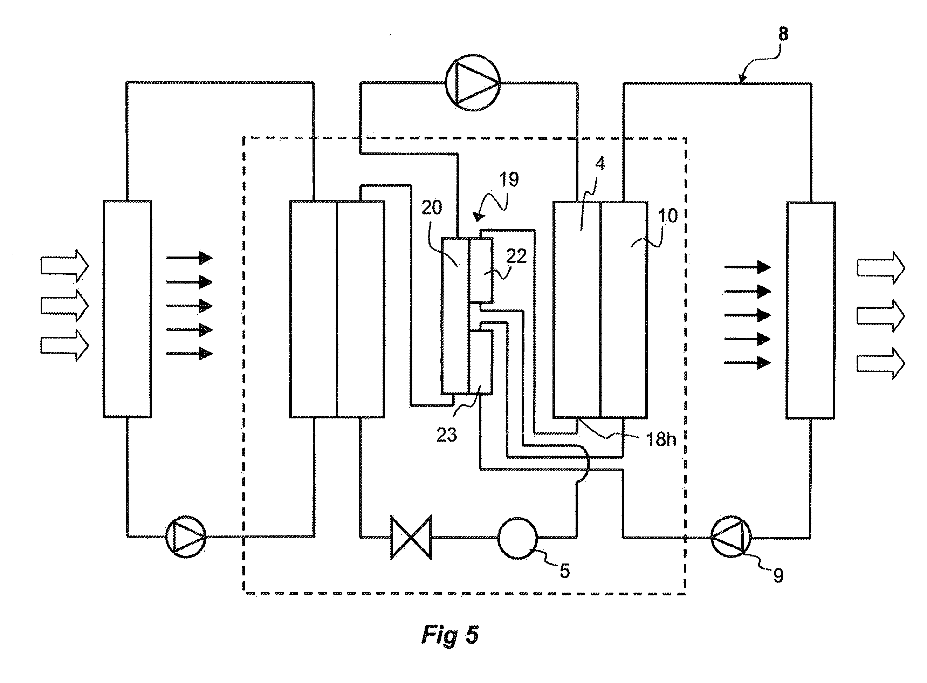

**Figure 5** depicts a further alternative embodiment of an internal heat exchanger **19**. It shows how the internal heat exchangers **19** according to Figures 3 and 4 can be combined and used simultaneously. The internal heat exchanger **19** according to this embodiment has a cold part-circuit **20** and two warm part-circuits **22,23** arranged in series after one another. The cold part-circuit **20** is connected as in Figure 3. The first warm part-circuit **22** is connected between the outlet **18h** of the condenser **4** and the inlet of the drying filter **5.** The second warm part-circuit **23** is connected between the pump **9** of the second circuit **8** and the inlet to the heat exchanger **10** of the second circuit **8**. This combined internal heat exchanger **19** achieves a further efficiency improvement in the system.

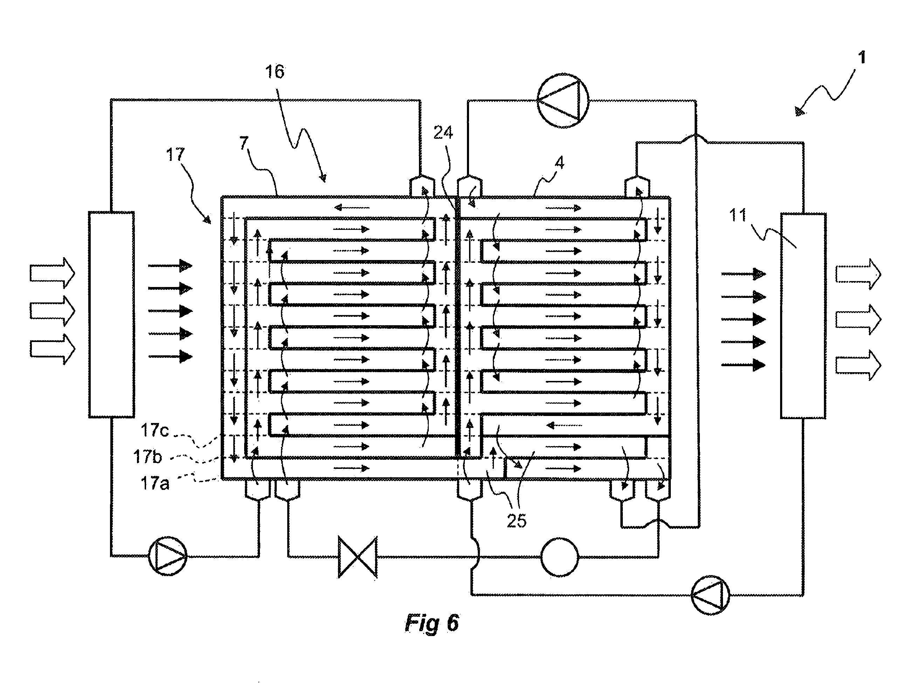

**Figure 6** depicts a compressor system 1 according to the invention and more specifically a section through the integrated unit **16** in the form of a plate heat exchanger. It illustrates what the internal heat exchanger **19** according to Figure 5 may notionally look like in practice. A number of horizontally arranged plates **17** direct the flow of the refrigerant and of the two coolants through the unit, represented by arrows. The condenser **4** and the evaporator **7** are delineated from one another by a separating wall **24**. The refrigerant and the two coolants thus pass through ducts formed in a conventional manner between the plates **17** and in certain cases through the plates **17.** The fluids pass quite near to one another but are separated by the material of the plates **17.** The fluids thus flow substantially in the same direction as the plates **17** are oriented and heat exchange takes place between the fluids via the walls of the plates **17.** The flow is therefore influenced by how the plates **17** are configured/embossed, which involves a great deal of potential for variation. The separating wall **24** between the condenser **4** and the evaporator **7** may conduct heat/cold and thus constitute a internal heat exchanger **19** which allows heat exchange between the coolant which comes from the radiator **11** and the refrigerant in the evaporator **7.**

One or more of the plates **17** may also be so configured that the refrigerant in the evaporator **7** is allowed to pass via a duct **25** through the separating wall **24** from the evaporator **7** to the condenser **4**. The duct **25** is formed by two or more plates **17a-c** and leads the refrigerant in between ducts which form part of the condenser **4**. Internal heat exchange in accordance with the schematic Figure 3 is thus accomplished.

The separating wall **24** between the condenser **4** and the evaporator **7** may also be insulated, in which case there is no need for the internal heat exchanger, i.e. that depicted schematically in Figure 4.

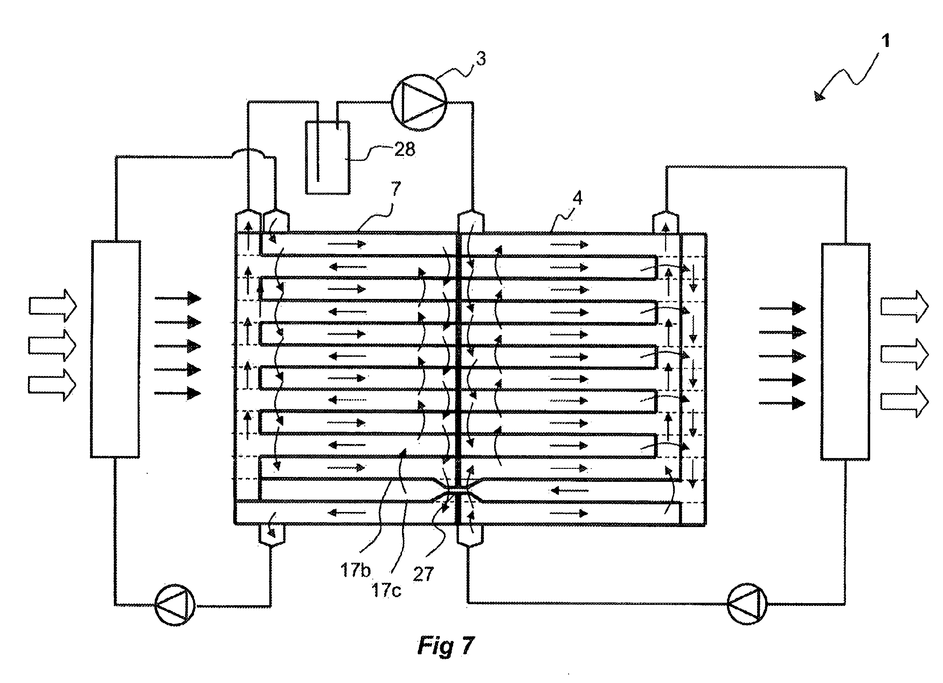

**Figure 7** depicts the compressor system **1** according to the invention but with a fixed constriction **27** integrated in the combined unit, instead of an externally fitted adjustable expansion valve. The constriction **27** may be embossed in one or more of the plates **17b-c** of the combined unit and effect a lowering of pressure in the system's refrigerant circuit. The integration reduces the number of potentially leaky connections and lines/hoses.

Liquids are substantially non-compressible, so to prevent a liquid/gas mixture reaching the compressor **3** and impairing its function, a container, a so-called accumulator **28,** is situated between the evaporator **7** and the compressor **3,** i.e. upstream of the compressor **3.** The outlet is via the top of the accumulator **28**, which means that it always delivers gas and not liquid. The accumulator **28** may also comprise a filter and drying means (not depicted). The constriction **27** may also take the form of a short pipe with a small, specified and well defined inside diameter (not depicted).

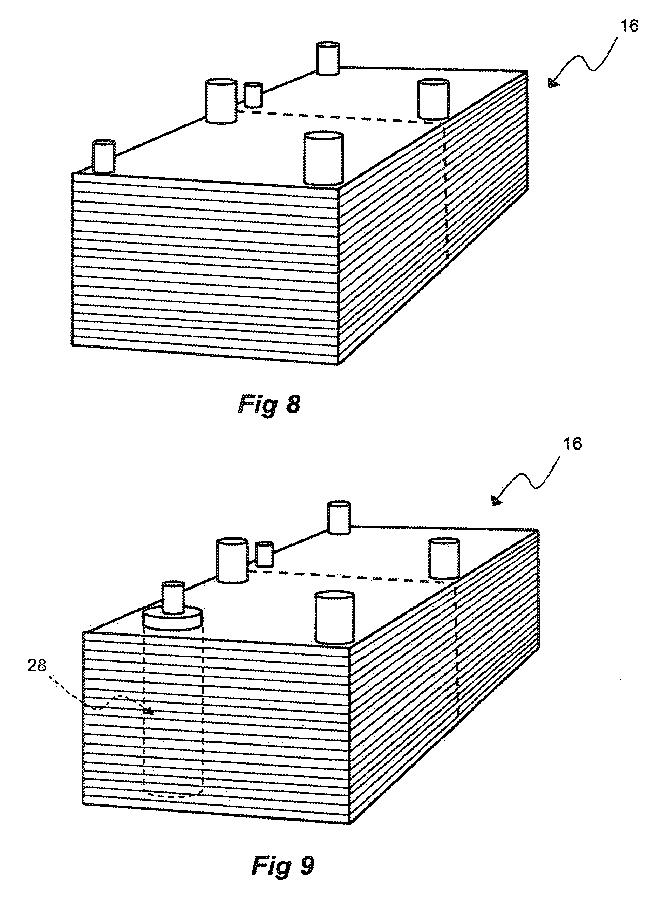

**Figure 8** depicts the invention's unit **16** according to Figure 7 with the expansion means, the constriction 27, integrated (therefore not visible). There is thus no need for the external pipe connections **18g,h** according to Figure 2 for connecting an external expansion valve.

**Figure 9** depicts the invention's unit **16** according to Figure 5. Both the expansion means/constriction and the drying filter/accumulator **28** are integrated in the combined unit **16** and there are no separate pipe connections for these components except for the outlet of the accumulator **28**, which has to be connected to the compressor **3.**

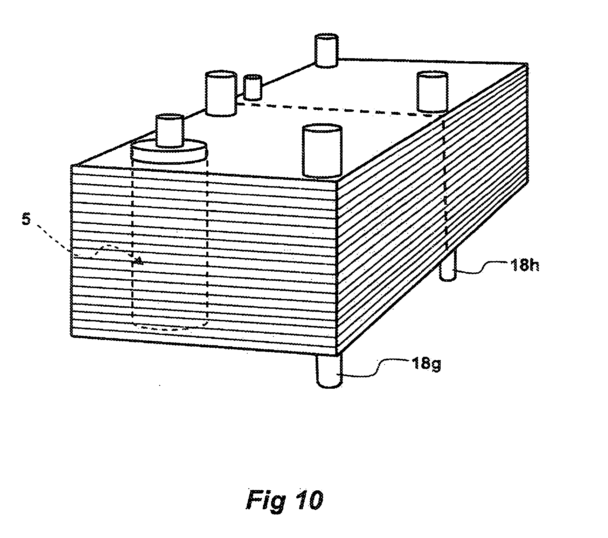

**Figure 10** depicts an embodiment of the unit **16** according to the invention with connections **18g,h** for an expansion means, an expansion valve (not depicted), and with an integrated drying filter **5.** Sometimes it may be advantageous to be able to use an external expansion valve which is adjustable so that the system can be trimmed for optimum efficiency.

The invention is described above with reference to a number of different preferred embodiments. The invention is of course not limited to those embodiments, which are only to be regarded as examples. Other variants of the invention are therefore also perfectly possible within the scope of protection of the claims. The combined unit may also with advantage be fitted directly adjacent to, or be integrated with, the compressor in order further to minimise the number of hoses and connections. The result may be a unit which is provided with a belt pulley at one end and has outlets for warm or cold water at its other end. It is therefore conceivable for the system according to the invention also to be usable for warming the air in, for example, a vehicle cab.

## Claims

1. A system for cooling and/or warming the interior of a vehicle, which system comprises a refrigerant circuit (2) with at least one compressor (3), one condenser (4), one evaporator (7) and one expansion means (6), which evaporator (7) and condenser (4) are combined/integrated to form a single common unit (16),
**characterised**
- **in that** at least one internal heat exchanger (19) is integrated in the same common unit (16), and in that the common unit (16) is of the plate heat exchanger type.

2. A system according to claim 1,
**characterised**
- **in that** the evaporator (7) is liquid-cooled and adapted to cooling of liquid in a further secondary circuit (12).

3. A system according to claim 1 or 2,
**characterised**
- **in that** the condenser (4) is liquid-cooled and adapted to warming of liquid in a further secondary circuit (8).

4. A system according to any one of the foregoing claims,
**characterised**
- **in that** the internal heat exchanger (19) is adapted to exchanging heat between the cold and warm sides of the refrigerant circuit (2).

5. A system according to any one of the foregoing claims,
**characterised**
- **in that** the cold part-circuit (20) of the internal heat exchanger (19) is connected between the outlet (18e) of the evaporator (7) and the inlet of the compressor (3), and the warm part-circuit (21) of the internal heat exchanger (19) is connected between the outlet (18h) of the condenser (4) and the inlet of the drying filter (5).

6. A system according to any one of the foregoing claims,
**characterised**
- **in that** the internal heat exchanger (19) is adapted to exchanging heat between the cold side of the refrigerant circuit (2) and the coolant which cools the condenser (4).

7. A system according to any one of the foregoing claims,
**characterised**
- **in that** the cold part-circuit (20) of the internal heat exchanger (19) is connected between the outlet (18e) of the evaporator (7) and the inlet of the compressor (3), and the latter's warm part-circuit (21) is connected between the outlet of the first pump (9) and the inlet (18b) of the first heat exchanger (10).

8. A system according to any one of the foregoing claims,
**characterised**
- **in that** the internal heat exchanger (19) is adapted both to exchanging heat between the cold and warm sides of the refrigerant circuit (2) and to exchanging heat between the cold side of the refrigerant circuit (2) and the coolant which cools the condenser (4).

9. A system according to any one of the foregoing claims,
**characterised**
- **in that** an expansion means in the form of a constriction (27) is integrated in the combined unit (16).

10. A system according to any one of the foregoing claims,
**characterised**
- **in that** the constriction (27) is configured/embossed in the combined unit (16).

11. A system according to any one of the foregoing claims,
**characterised**
- **in that** the constriction (27) is arranged in the separating wall (24) between the high and low pressure sides of the combined unit (16).

12. A system according to any one of the foregoing claims,
**characterised**
- **in that** the expansion means takes the form of an externally fitted adjustable expansion valve (6).

13. A system according to any one of the foregoing claims,
**characterised**
- **in that** a drying filter/accumulator (5,28) is integrated in the combined unit (16).

## Patentansprüche

1. System zum Kühlen und/oder Erwärmen des Innenraums eines Fahrzeuges, wobei das System umfasst:
einen Kühlmittelkreislauf (2) mit wenigstens einem Kompressor (3), einen Kondensator (4), einen Verdampfer (7) und ein Expansionsmittel (6), wobei der Verdampfer (7) und Kondensator (4) kombiniert/Integriert sind, um eine einzelne gemeinsame Einheit (16) zu bilden,
**dadurch gekennzeichnet, dass** zumindest ein interner Wärmetauscher (19) In die gemeinsame Einheit (16) Integriert Ist, und dass die gemeinsame Einheit (16) als Plattenwärmetauscher ausgeführt ist.

2. System nach Anspruch 1,
**dadurch gekennzeichnet, dass** der Verdampfer (7) flüssigkeitsgekühlt ist und dazu eingerichtet ist, Flüssigkeit In einem weiteren, sekundären Kreislauf (12) zu kühlen.

3. System nach Anspruch 1 oder 2,
**dadurch gekennzeichnet, dass** der Kondensator (4) fiüssigkeitsgekühlt Ist und dazu eingerichtet Ist, Flüssigkeit In einem weiteren, sekundären Kreislauf (8) zu erwärmen.

4. System nach einem der vorangegangenen Ansprüche,
**dadurch gekennzeichnet, dass** der Interne Wärmetauscher (19) dazu eingerichtet Ist, Wärme zwischen den kalten und warmen Seiten des Kühlmittelkreislaufs (2) auszutauschen.

5. System nach einem der vorangegangenen Ansprüche,
**dadurch gekennzeichnet, dass** der kalte Teilkreislauf (20) des internen Wärmetauschers (19) zwischen dem Auslass (18e) des Verdampfers (7) und dem Einlass des Kompressors (3) angeschlossen Ist, und der warme Teilkreislauf (21) des internen Wärmetauschers (19) zwischen dem Auslass (18h) des Kondensators (4) und dem Einlass des Trockenfilters (5) angeschlossen ist.

6. System nach einem der vorangegangenen Ansprüche,
**dadurch gekennzeichnet, dass** der interne Wärmetauscher (19) dazu eingerichtet ist, Wärme zwischen der kalten Seite des Kühlkreislaufs (2) und dem Kühlmittel auszutauschen, das den Kondensator (4) kühlt.

7. System nach einem der vorangegangenen Ansprüche,
**dadurch gekennzeichnet, dass** der kalte Teilkreislauf (20) des Internen Wärmetauschers (19) zwischen dem Auslass (18e) des Verdampfers (7) und dem Einlass des Kompressors (3) angeschlossen ist, und der warme Teilkreislauf (21) des Letzteren zwischen dem Auslass der ersten Pumpe (9) und dem Einlass (18b) des ersten Wärmetauschers (10) angeschlossen ist.

8. System nach einem der vorangegangenen Ansprüche,
**dadurch gekennzeichnet, dass** der interne Wärmetauscher (19) dazu eingerichtet Ist, sowohl Wärme zwischen den kalten und warmen Seiten des Kühlkreislaufs (2) auszutauschen, als auch Wärme zwischen der kalten Seite des Kühlkreislaufs (2) und dem Kühlmittel auszutauschen, welches den Kondensator (4) kühlt.

9. System nach einem der vorangegangenen Ansprüche,
**dadurch gekennzeichnet, dass** ein Expanslonsmlttel In Form einer Verengung (27) in der kombinierten Einheit (16) integriert Ist.

10. System nach einem der vorangegangenen Ansprüche,
**dadurch gekennzeichnet, dass** die Verengung (27) In der kombinierten Einheit (16) konfiguriert/eingeprägt ist.

11. System nach einem der vorangegangenen Ansprüche,
**dadurch gekennzeichnet, dass** die Verengung (27) In der Trennwand (24) zwischen den Hoch- und Niedrigdruckseiten der kombinierten Einheit (16) angeordnet ist.

12. System nach einem der vorangegangenen Ansprüche,
**dadurch gekennzeichnet, dass** das Expansionsmittel als extern angebrachtes, justierbares Expansionsventil (6) ausgeführt ist.

13. System nach einem der vorangegangenen Ansprüche,
**dadurch gekennzeichnet, dass** ein Trockenfilter/Trockenspeicher (5, 28) in der kombinlerten Einheit (16) integriert ist.

## Revendications

1. Système pour refroidir et/ou réchauffer l'intérieur d'un véhicule, lequel système comprend un circuit réfrigérant (2) pourvu d'au moins un compresseur (3), un condenseur (4), un évaporateur (7) et un moyen de détente (6), lesquels évaporateur (7) et condenseur (4) sont combinés/intégrés pour former une seule unité commune (16),
**caractérisé**
- **en ce qu'**au moins un échangeur de chaleur (19) interne est intégré dans la même unité commune (16) et en ce que l'unité commune (16) est du type à échangeur de chaleur à plaques.

2. Système selon la revendication 1,
**caractérisé**
- **en ce que** l'évaporateur (7) est refroidi par liquide et conçu pour refroidir du liquide dans un autre circuit secondaire (12).

3. Système selon la revendication 1 ou 2,
**caractérisé**
- **en ce que** le condenseur (4) est refroidi par liquide et conçu pour réchauffer du liquide dans un autre circuit secondaire (8).

4. Système selon l'une quelconque des revendications précédentes,
**caractérisé**
- **en ce que** l'échangeur de chaleur (19) interne est conçu pour échanger de la chaleur entre les côtés froid et chaud du circuit réfrigérant (2).

5. Système selon l'une quelconque des revendications précédentes,
**caractérisé**
- **en ce que** le circuit partie froide (20) de l'échangeur de chaleur (19) interne est connecté entre la sortie (18e) de l'évaporateur (7) et l'entrée du compresseur (3), et le circuit partie chaude (21) de l'échangeur de chaleur (19) interne est connecté entre la sortie (18h) du condenseur (4) et l'entrée du filtre de séchage (5).

6. Système selon l'une quelconque des revendications précédentes,
**caractérisé**
- **en ce que** l'échangeur de chaleur (19) interne est conçu pour échanger de la chaleur entre le côté froid du circuit réfrigérant (2) et le liquide de refroidissement qui refroidit le condenseur (4).

7. Système selon l'une quelconque des revendications précédentes,
**caractérisé**
- **en ce que** le circuit partie froide (20) de l'échangeur de chaleur (19) interne est connecté entre la sortie (18e) de l'évaporateur (7) et l'entrée du compresseur (3), et le circuit partie chaude (21) de ce dernier est connecté entre la sortie de la première pompe (9) et l'entrée (18b) du premier échangeur de chaleur (10).

8. Système selon l'une quelconque des revendications précédentes,
**caractérisé**
- **en ce que** l'échangeur de chaleur (19) interne est conçu à la fois pour échanger de la chaleur entre les côtés froid et chaud du circuit réfrigérant (2) et pour échanger de la chaleur entre le côté froid du circuit réfrigérant (2) et le liquide de refroidissement qui refroidit le condenseur (4).

9. Système selon l'une quelconque des revendications précédentes,
**caractérisé**
- **en ce qu'**un moyen de détente sous la forme d'un étranglement (27) est intégré dans l'unité combinée (16).

10. Système selon l'une quelconque des revendications précédentes,
**caractérisé**
- **en ce que** l'étranglement (27) est configuré/embouti dans l'unité combinée (16).

11. Système selon l'une quelconque des revendications précédentes,
**caractérisé**
- **en ce que** l'étranglement (27) est agencé dans la paroi de séparation (24) entre les côtés haute pression et basse pression de l'unité combinée (16).

12. Système selon l'une quelconque des revendications précédentes,
**caractérisé**
- **en ce que** le moyen de détente prend la forme d'une soupape de détente (6) réglable, montée à l'extérieur.

13. Système selon l'une quelconque des revendications précédentes,
**caractérisé**
- **en ce qu'**un filtre de séchage/accumulateur (5, 28) est intégré dans l'unité combinée (16).
